# EUROPEAN PATENT SPECIFICATION

(11) **EP 4 577 349 B1**
(45) Date of publication and mention of the grant of the patent: **18.11.2026**
(21) Application number: 23818422.0
(22) Date of filing: 05.12.2023
(51) Int. Cl.: B01L 3/00, C12M 1/00, G01N 1/40

(54) **DEVICE FOR INTEGRATED PROCESSING OF BIOLOGICAL SAMPLES**
VORRICHTUNG ZUR INTEGRIERTEN PROZESSIERUNG BIOLOGISCHER PROBEN
DISPOSITIF DE TRAITEMENT INTEGRE D'ECHANTILLONS BIOLOGIQUES

(30) Priority: 05.12.2022 EP 22211537
(43) Date of publication of application: 02.07.2025
(73) Proprietor: Amiprox Pte. Ltd., 098491 Singapore (SG)
(72) Inventor: BEYER, Sebastian, 26129 Oldenburg (DE); TILLMANN, Michael Joachim Karl Servatius, Singapore 098563 (SG)
(74) Representative: Danner, Stefan
(86) International application number: PCT/EP2023/084366
(87) International publication number: WO 2024/121159

(56) References cited:
- WO-A1-2018/060366
- DE-B3- 102016 201 181
- US-A1- 2009 087 859

## Description

### TECHNICAL FIELD

The present invention relates to a device and a corresponding method for the integrated processing of biological samples solely by means of centrifugal force applied along the vertical axis of the device, wherein the centrifugal force is increased with onward sample processing.

### BACKGROUND

Over the last decade, the development of integrated on-site or point-of-care devices for biomolecular diagnostics has been fueled by miniaturization and automation of the analytical protocols to be employed. Many such devices are based on microfluidic systems. The obvious advantages of microfluidics include reduced consumption of samples and reagents, enhanced efficiency, and comparably fast reaction times. DE102016201181B3 is prior art.

However, there are still some obstacles to be overcome in order to further improve automation. In many cases, biomolecular analyses are not hampered by the actual diagnostic assays themselves, but rather by the processing of the biological samples during the time from their collection until introduction into the assay device. Biological samples typically need to be subjected to any form of purification, fractionation, filtering, dilution, concentration, digestion or preservation in order to be suitable for downstream analysis (e.g., do not clog a device due to high viscosity) and thus to provide reliable and accurate results.

These preparatory steps of sample processing often require lengthy and tedious manual handling and a considerable use of disposable consumables. Frequently, different devices are required for performing different processing steps, thus increasing the intrinsic error of an analysis due to unnecessary sample manipulation. The protocols employed are usually not standardized, which interferes with reproducibility and quality control as well as with the setup of automated workflows and sample processing in high-throughput format.

Accordingly, there is an ongoing need for improved devices and corresponding methods for the processing of biological samples, especially in connection with sophisticated diagnostic applications, such as genomic, proteomic, and metabolomic analyses. In particular, there is a need for a single and easy-to-use microfluidic device that integrate multiple steps of sample processing. and do not require trained personnel for operation.

Hence, it is an object of the present invention to provide such device for the integrated processing of biological samples and a corresponding method for its application.

### SUMMARY OF THE INVENTION

In one aspect, the present invention relates to a device for the processing of a biological sample by means of centrifugal force applied along the vertical axis of the device, the device comprising: (i) at least a first compartment for the performing of a first step of sample processing, the first compartment comprising a structure for the loading of the biological sample at its proximal part and a first microfluidic structure at its distal part; and (ii) at least a second compartment for the performing of a second step of sample processing, the proximal end of the second compartment being in fluid communication with the distal end of the first compartment, and the second compartment comprising a second microfluidic structure at its distal part, with the second step of sample processing being consecutive to the first step of sample processing; wherein the at least first compartment and the at least second compartment are in connection with each other, with the connection being selected from a plug connection and a bolted connection; wherein the first microfluidic structure comprises capillaries having a first average diameter, and the second microfluidic structure comprises capillaries having a second average diameter, with the first average diameter being larger than the second average diameter, thus enabling the first microfluidic structure the passing of the biological sample by applying a first centrifugal force along the vertical axis the device, and enabling the second microfluidic structure the passing of the biological sample by applying a second centrifugal force along the vertical axis the device, with the second centrifugal force being larger than the first centrifugal force; and wherein the first microfluidic structure exhibits a more hydrophilic behavior than the second microfluidic structure.

The first microfluidic structure may exhibit a more hydrophilic behavior than the second microfluidic structure, because the material of which the first microfluidic structure is made may exhibits a more hydrophilic behavior than the material of which the second microfluidic structure is made. In preferred embodiments, the first microfluidic structure has functional surface modifications in order to exhibit a more hydrophilic behavior than the second microfluidic structure.

In further preferred embodiments, the processing of the biological sample occurs unidirectionally along the vertical axis of the device.

The processing of the biological sample comprises an at least partial purification of the sample. In preferred embodiments, the processing of the biological sample comprises at least two steps selected from the group consisting of collecting of the sample, filtering of the sample, desalting of the sample, concentrating of the sample, diluting of the sample, solubilizing and/or digesting of the sample, depleting a fraction contained in the sample, and enriching a fraction contained in the sample.

In particular embodiments, the device is configured to be placed in and to be used with a reaction vessel, with the reaction vessel having a volume of 0.1 ml to 50 ml, preferably of 0.2 ml to 10 ml, and more preferably of 0.5 ml to 2.5 ml.

In other particular embodiments, the device further comprises a compartment for sample loading, with the distal end of the compartment for sample loading being connectable to the proximal end of the at least first compartment such that the two compartments are in fluid communication.

In yet other particular embodiments, the device further comprises a reagent reservoir, with the distal end of the reagent reservoir being connectable to the proximal end of the compartment for sample loading such that the two compartments are in fluid communication; or with the distal end of the reagent reservoir being connectable to the proximal end of the at least first compartment such that the two compartments are in fluid communication, particularly wherein the reagent reservoir is pre-filled with reagent(s).

In yet other particular embodiments, the device further comprises a sample collection reservoir for the collection of the processed sample, with the proximal end of the sample collection reservoir being connectable to the distal end of the at least second compartment such that the two compartments are in fluid communication.

In another aspect, the present invention relates to a method for the processing of a biological sample by means of centrifugal force applied along the vertical axis of a processing device, the method comprising: (i) introducing of the biological sample in a device as defined herein above; (ii) performing the first step of sample processing in the at least a first compartment of the device by applying a first centrifugal force along the vertical axis of the device, allowing the sample to pass the first microfluidic structure; and (iii) performing the second step of sample processing in the at least second compartment of the device by applying a second centrifugal force along the vertical axis of the device, allowing the sample to pass the second microfluidic structure, wherein the second centrifugal force is larger than the first centrifugal force.

In particular embodiments, the method further comprises: loading the biological sample to the compartment for sample loading being connected to the at least first compartment of the device; and/or after the biological sample has been introduced in the device, releasing the reagent(s) from the reagent reservoir being connected to the compartment for sample loading or being connected to the at least first compartment of the device.

In other particular embodiments, the method further comprises: collecting the processed sample in the sample collection reservoir being connected to the at least second compartment of the device.

In preferred embodiments, the biological sample is selected from the group consisting of blood, plasma, serum, saliva, urine, nasopharyngeal swab, oropharyngeal swab, and tissue specimens

In another aspect, the present invention relates to the use of a device as defined herein above for the processing of a biological sample to be subjected to 'omics' applications, particularly wherein the 'omics' applications are selected from the group consisting of genomics, transcriptomics, proteomics, lipidomics, glycomics, microbiomics, and metabolomics.

### DESCRIPTION OF THE DRAWINGS

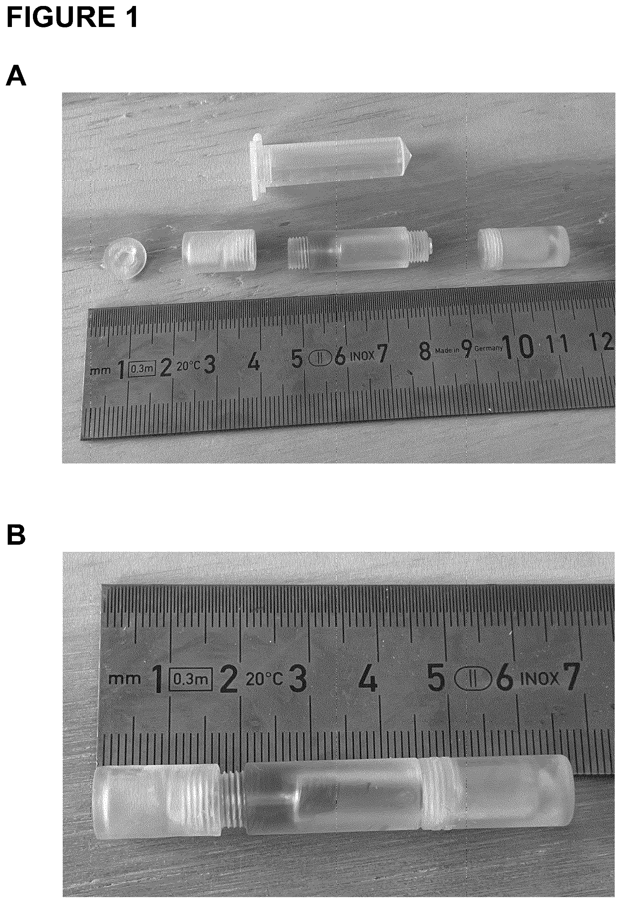

**FIGURE 1****:** (A) Photograph of an exemplary device in accordance with the present invention. The device is configured to be used in a standard 2 ml reaction tube (shown at the top row) during centrifugation (or configured to have the shape and size of a standard 2 ml reaction tube). The device comprises a processing unit with two compartments (bottom row, third from left) to be configured in accordance with the intended application. The processing unit has an interface at its proximal end for sample uptake. A reagent reservoir (bottom row, second from left) is connected to the processing unit after sample uptake. The reagent reservoir is closed with a screw cap (bottom row, left) after loading of the required reagents. After processing the purified sample by means of applying centrifugal force along the vertical axis of the device the processed sample is collected in a sample collection reservoir (bottom row, right) connected to the distal end of the processing unit. (B) Photograph of the exemplary device in assembled form.

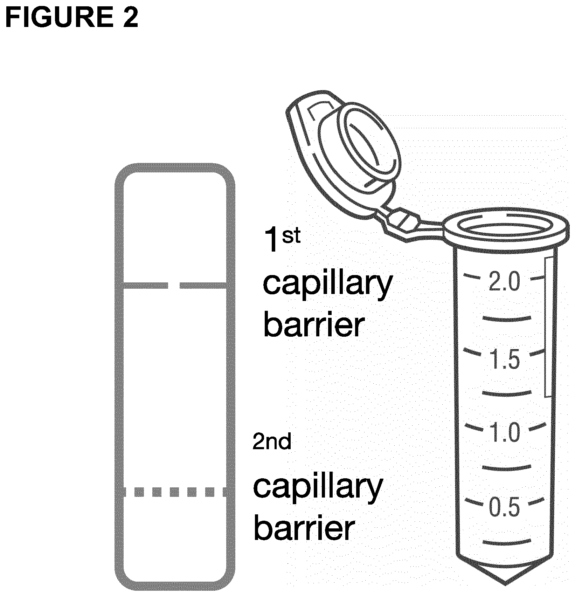

**FIGURE 2****:** Illustration of the general principle underlying the device in accordance with the present invention. The device comprises at least two compartments for sample processing, each compartment comprising a microfluidic structure. The average diameter of the capillaries of the first microfluidic structure (or capillary barrier) is larger than that of the capillaries of the second microfluidic structure, thus requiring an increase of centrifugal force for the sample to pass the capillary barriers when proceeding from the first to the second compartment. The device is configured that it can be used with standard reaction tubes, here a 2 ml reaction tube.

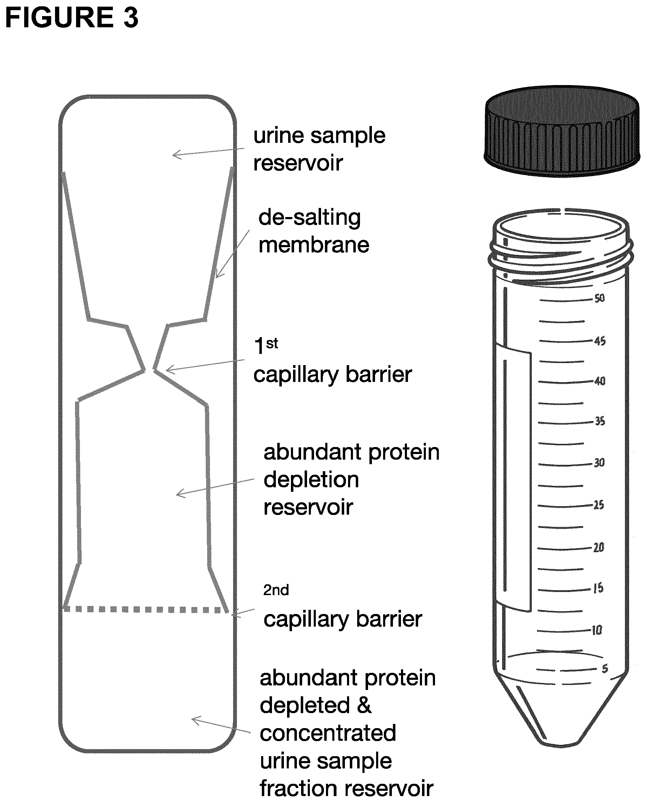

**FIGURE 3****:** Illustration of an exemplary device in accordance with the present invention adapted to the processing of urine samples. The device comprises two compartments for the desalting of the urine sample and for the removal of abundant proteins, respectively. For this purpose, the first compartment is equipped with a filter membrane for desalting and the second compartment with an affinity matrix for the binding of abundant proteins. Each compartment has a microfluidic structure (capillary barrier) at its distal end, with the first microfluidic structure having more capillaries with a larger average diameter than the second microfluidic structure. The processed sample is collected in a sample collection reservoir. The device is configured that it can be used with standard 50 ml reaction tube.

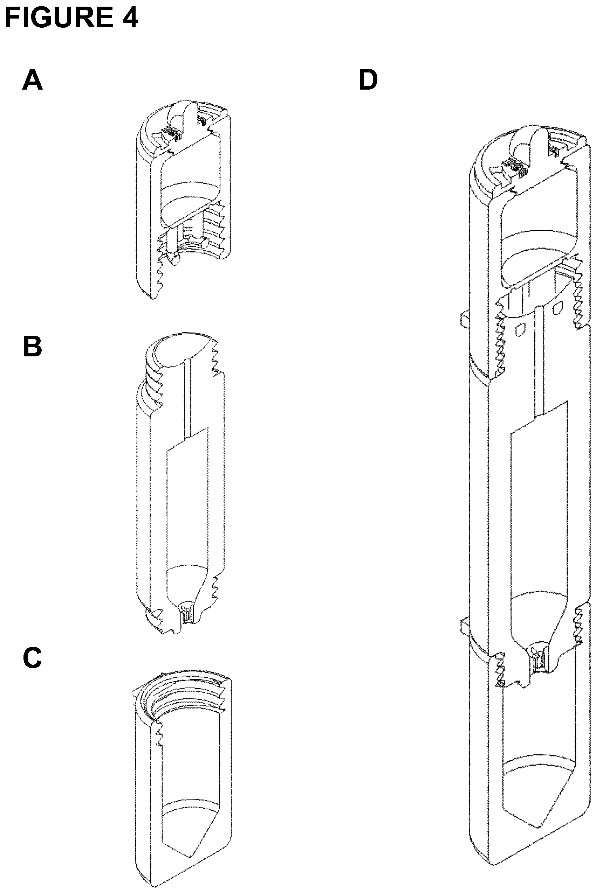

**FIGURE 4****:** Illustration of an exemplary multi-part device in accordance with the present invention. The device comprises a reagent reservoir **(A)** having a closed bottom surface (e.g., in form of a membrane) with a breaking point at is broken by a push pillar when the reservoir is connected to the central processing unit **(B)** by means of a screw thread. The processing unit comprises at least two compartments for sample processing and is connected to a sample collection reservoir **(C)** by means of a screw thread. The assembled device is shown in **(D).**

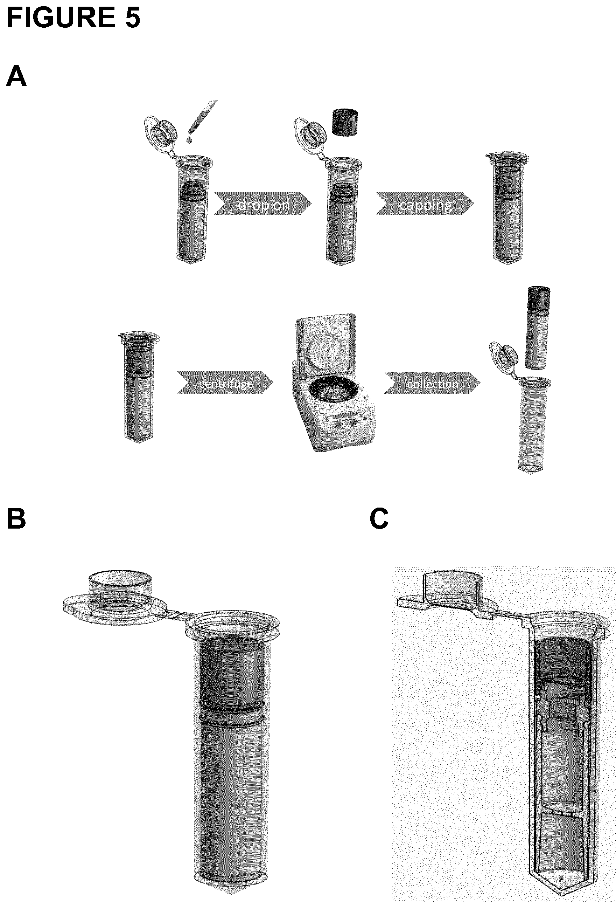

**FIGURE 5****:** Illustration of an exemplary workflow for sample processing in accordance with the present invention **(A).** The biological sample is applied with a pipette to the first compartment of the device placed in a 2 ml standard reaction tube. A reagent reservoir comprising buffers and other reagents for performing the sample processing is connected to the fist compartment of the device. The reaction tube is closed, and sample processing is performed by applying centrifugal force in a microcentrifuge. The device has an open bottom surface so that the processed sample is collected in the reaction tube and ready for further analysis after the device has been removed from the tube. **(B)** The corresponding device employed is configured to fit in a standard reaction tube. The portion shown in light grey comprises the first and second compartments, while the portion shown in dark grey represents a reagent reservoir being connected to the first compartment. (C) Cross-sectional view of the corresponding device shown in (B) illustrating the two microfluidic structures at the distal parts of the first and second compartments, respectively. The bottom surface of the device is open, allowing collection of the processed sample in the reaction tube.

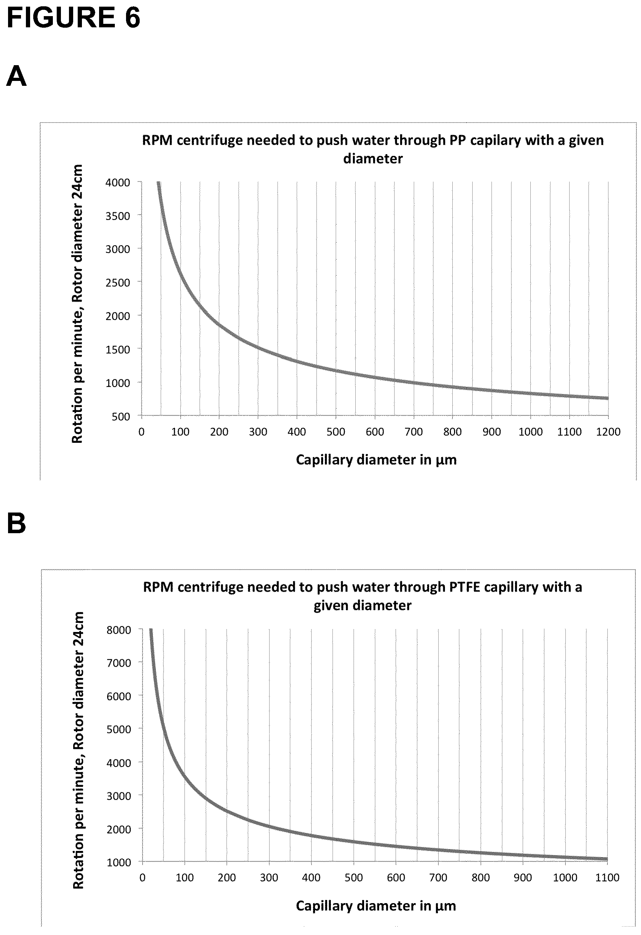

**FIGURE 6****:** Illustration of the impact of the polymeric material of which the microfluidic structures are made on the centrifugal force (in rounds per minute, rpm) required to completely transfer water through capillaries of a certain average diameter (in µm, shown is a range between 50 µm and 1.1 mm). Exemplary analyses are shown for microfluidic structures made of polypropylene **(A)** or polytetrafluoroethylene **(B).** The microfluidic structures employed in the analyses had a thickness of 1 mm. Centrifugation was performed at a temperature of 20°C using 2 ml reaction tubes in a rotor having a diameter of 24 cm.

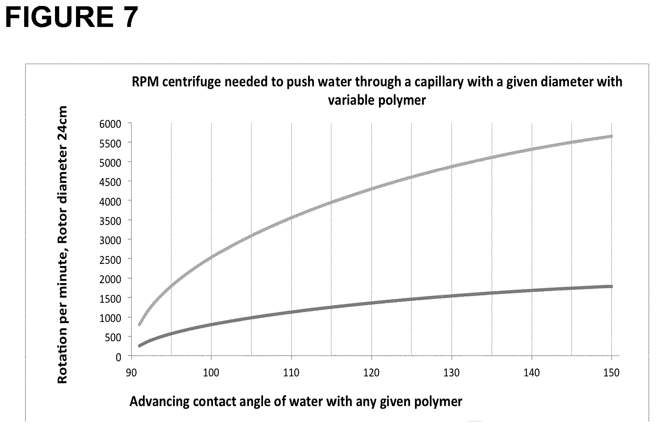

**FIGURE 7****:** Illustration of the impact of the advancing contact angle (shown is a range between 90° and 150°) on the centrifugal force (in rounds per minute, rpm) required to completely transfer water through capillaries (made of an arbitrary polymer) and having an average diameter of 100 µm (upper curve) and 1 mm (lower curve). The advancing contact angle is the highest possible contact angle of a droplet sitting on a surface. The advancing contact angle is measured when the liquid (here, water) wets the previously dry surface by gradually applying the liquid to the surface with a needle. When (or just before) the contact line starts to move, the angle can be measured. The microfluidic structures employed in the analyses had a thickness of 1 mm. Centrifugation was performed at a temperature of 20°C using 2 ml reaction tubes in a rotor having a diameter of 24 cm.

### DETAILED DESCRIPTION

The present invention is based on the unexpected finding that the processing and preparation of biological samples for downstream applications can be performed solely by means of vertical centrifugal force in a single device, thus providing for a significantly less laborious, simplified, and cost-effective process. Hands-on time is limited to only minutes for loading the sample and placing the device in a centrifuge. Depending on the processing protocol applied, both hands-on time and total costs per assay can be reduced by at least 30-60%.

The device of the present invention has a particularly design with a vertical arrangement of at least two compartments in fluid communication with each other and with a microfluidic structure located at their respective distal ends. Each compartment is adapted for performing one step of sample processing, with the transport from one compartment to the consecutive one being controlled by the centrifugal force applied. The biological sample is introduced into the device and transported by applying centrifugal force along the vertical axis of the device, wherein the resistance for the sample to pass the first microfluidic structure is lower than the resistance to pass the second microfluidic structure. This is accomplished by the configuration of the microfluidic structures, with the capillaries of the first microfluidic structure having a larger average diameter than the capillaries of the second microfluidic structure, and the first microfluidic structure also exhibiting a more hydrophilic behavior than the second microfluidic structure. Hence, the processing of the biological sample occurs unidirectionally along the vertical axis of the device.

The present invention will be described in the following with respect to particular embodiments and with reference to certain drawings but is to be understood as not limited thereto but only by the appended claims.

Where the term "comprising" is used herein, it does not exclude other elements or steps. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Where an indefinite or definite article is used when referring to a singular noun, e.g., "a", "an" or "the", this includes a plural of that noun unless specifically stated otherwise.

In case, numerical values are indicated in the context of the present invention the skilled person will understand that the technical effect of the feature in question is ensured within an interval of accuracy, which typically encompasses a deviation of the numerical value given of ± 10%, and preferably of ± 5%.

Furthermore, the terms first, second, third, (a), (b), (c), and the like, in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Further definitions of term will be given in the following in the context of which the terms are used. The following terms or definitions are provided solely to aid in the understanding of the invention. These definitions should not be construed to have a scope less than understood by a person of ordinary skill in the art.

In one aspect, the present invention relates to a device for the processing of a biological sample by means of centrifugal force applied along the vertical axis of the device, the device comprising:
(i) at least a first compartment for the performing of a first step of sample processing, the first compartment comprising a structure for the loading of the biological sample at its proximal part and a first microfluidic structure at its distal part; and
(ii) at least a second compartment for the performing of a second step of sample processing, the proximal end of the second compartment being in fluid communication with the distal end of the first compartment, and the second compartment comprising a second microfluidic structure at its distal part, with the second step of sample processing being consecutive to the first step of sample processing;

wherein the at least first compartment and the at least second compartment are in connection with each other, with the connection being selected from a plug connection and a bolted connection;
wherein the first microfluidic structure comprises capillaries having a first average diameter, and the second microfluidic structure comprises capillaries having a second average diameter, with the first average diameter being larger than the second average diameter, thus enabling the first microfluidic structure the passing of the biological sample by applying a first centrifugal force along the vertical axis the device, and enabling the second microfluidic structure the passing of the biological sample by applying a second centrifugal force along the vertical axis the device, with the second centrifugal force being larger than the first centrifugal force; and
wherein the first microfluidic structure exhibits a more hydrophilic behavior than the second microfluidic structure.

The device of the present invention comprises at least two compartments, a first compartment and a second compartment. The device may have more than two compartments, such as three, four, five, six, or more compartments. The compartments are vertically arranged with the distal end of one compartment being in connection with the proximal end of the next compartment so that the two compartments are in fluid communication with each other, that is, the sample to be processed can be transferred from one to the next compartment. The connection between two compartments (other than the at least first and second compartments) may be rigid, that is, the two compartments represent a monolithic entity. The connection between the at least first and second compartments is detachable, wherein the detachable connection is in form of a plug connection (i.e., plug and socket) or a bolted connection (i.e., a screw fitting).

The at least first and second compartments of the device represent reaction chambers, in which the individual consecutive steps of sample processing take place. The first processing step is performed in the first compartment, the second processing step (which is consecutive to the first one) in the second compartment, and so on. The compartments may have a spherical, tubular (cylindrical) or conical shape, with or without tapering towards the proximal and/or distal end. The first compartment comprises a structure for the loading of the biological sample that is arranged at the proximal end of the compartment. In its easiest form, such structure is an opening through which the biological sample is introduced in the compartment. The opening may be sealable or lockable with any form of cap, such as a revolving cap. The structure for the loading of the sample may alternatively be configured as concave surface at the proximal end of the first compartment with an opening at the bottom center in order to facilitate fluid flow towards the bottom center, even of small sample volumes in the µl scale, and thus application and processing of the complete sample. In some embodiments, the structure for the loading is arranged in proximity or directly adjacent to the first microfluidic structure in the at least first compartment.

Each compartment comprises a microfluidic structure at its distal part, typically being arranged in the distal third of the compartment, and particularly within the distal 20% or 10% of the compartment. The term "microfluidic structure", as used herein, refers to a system of one or more microchannels or capillaries in a typically polymeric matrix. The microfluidic structure may also be arranged directly at the connection site between two compartments. Typically, the microfluidic structures of the device are configured as molecular sieve or barrier comprising capillaries. The microfluidic structure has a typical thickness of up to 10 mm. In particular embodiments, the microfluidic structure has a thickness of 0.5 mm, 1 mm, 2 mm, 2.5 mm, 3 mm, 4 mm, 5 mm, 6 mm, 7 mm, 7.5 mm, 8 mm, 9 mm or 10 mm. Fluid flow through the microfluidic structures is driven by applying external centrifugal force along the vertical axis of the device. Accordingly, in typical embodiments of the present invention, it is not foreseen to further involve the arrangement of micropumps for active manipulation of fluid flow. The general technical principle underlying the device of the present invention is schematically illustrated in Figure 2.

The microfluidic structures may be produced by various well-established technologies of additive manufacturing (exemplary reviews are given), such as 3D printing (Ngo, T.D. et al. (2018) Composites Part B: Engineer. 143, 172-196), injection molding (Singh, S. & Verma, A. (2017) Materialstoday Proc. 4, 1423-1433), fused deposition molding (Penumakala, P.K. et al. (2020) Composites Part B: Engineer. 201, e108336), stereo lithography (Huang, J. et al. (2020) Processes 8, e1138), selective laser sintering (Rajesh, R. et al. (2015) Int. J. Curr. Engineer. Sci. Res. 2, 91-100), and hot embossing (Deshmukh, S.S. & Goswami, A. (2020) Materialstoday Proc. 26, 405-414). In specific embodiments, the microfluidic structures are produced by means of 3D printing or by means of injection molding.

The microfluidic structure comprise one or more capillaries which allow fluid transfer through the structure. Typically, the one or more capillaries have a tubular (cylindrical) or almost tubular shape. However, non-cylindrical capillaries may be possible as well. Typically, the average diameter of the capillaries is in the range between 10 µm and 2 mm, and preferably in the range of 50 µm to 1.5 mm or of 100 µm to 1 mm. Exemplary ranges of average diameters are 0.1 mm to 0.5 mm, 0.2 mm to 0.8 mm, and 0.5 mm to 1 mm. Exemplary average diameters are 10 µm, 20 µm, 30 µm, 40 µm, 50 µm, 60 µm, 70 µm, 80 µm, 90 µm, 100 µm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm.

The average diameter of the capillaries comprised in the first microfluidic structure (in the first compartment) is larger than the average diameter of the capillaries comprised in the second microfluidic structure (in the second compartment). Typically, the average diameter of the capillaries in the first microfluidic structure is 1.5 times to 15 times larger than the average diameter of the capillaries in the second microfluidic structure, and preferably 2 times to 10 times larger. In exemplary embodiments, the average diameter of the capillaries in the first microfluidic structure is 1.5 times, 2 times, 3 times, 4 times, 5 times, 6 times, 7 times, 8 times, 9 times, 10 times, 11 times, 12 times 13 times, 14 times or 15 times larger than the average diameter of the capillaries in the second microfluidic structure. For example, the average diameter of the capillaries in the first microfluidic structure may be 1 mm and the average diameter of the capillaries in the second microfluidic structure may be 0.1 mm; or the average diameter of the capillaries in the first microfluidic structure may be 0.5 mm and the average diameter of the capillaries in the second microfluidic structure may be 0.2 mm.

Should the device comprise a third (or any further) compartment with a third (or any further) microfluidic structure, the capillaries comprised in the third (or any further) microfluidic structure have an average diameter being smaller than the average diameter of the capillaries comprised in the second (or any preceding) microfluidic structure. The above considerations apply *mutatis mutandis.*

The smaller average diameter of the capillaries in the second microfluidic structure as compared to the first microfluidic structure results in a higher resistance for the passing of the sample through the second microfluidic structure. Hence, the centrifugal force to be applied to transfer the sample through the second microfluidic structure has to be higher than that to transfer the sample through the first microfluidic structure. **In** other words, if a first centrifugal force is to be applied along the vertical axis the device to enable the passing of the sample through the first microfluidic structure and a second centrifugal force is to be applied along the vertical axis the device to enable the passing of the sample through the second microfluidic structure, then the second centrifugal force has to be larger than the first centrifugal force.

Furthermore, the first microfluidic structure exhibits a more hydrophilic behavior than the second microfluidic structure. To this end, the material of which the first microfluidic structure is made may exhibit a more hydrophilic behavior than the material of which the second microfluidic structure is made. Preferably, the first microfluidic structure has functional surface modifications in order to exhibit a more hydrophilic behavior than the second microfluidic structure.

Hydrophilic and hydrophobic materials are generally defined by the geometry of water on a flat surface, and specifically by the angle between a droplet's edge and the surface underneath it. This is commonly called the (static) contact angle. More precisely, however, no equilibrium contact angle, and thus an actually static contact angle, exists in nature. Rather, the advancing contact angle (i.e., the highest possible contact angle) and the receding contact angle (i.e., the lowest possible contact angle) should be determined to get a true picture of the wettability of a surface, and thus the hydrophilic or hydrophobic behavior of a material. Generally, if the droplet spreads, wetting a large area of the surface, then the contact angle is less than 90°, and that surface is considered hydrophilic or water-loving. In contrast, if the droplet forms a sphere that barely touches the surface, the contact angle is more than 90°, and the surface is hydrophobic or water-fearing. The more polar or charged functional groups a material has, the higher is its solubility in water or other polar substances (aqueous solvents), the more hydrophilic it is.

Typically, the microfluidic structures used herein are made of polymeric materials. Suitable polymeric materials include polypropylene, polyethylene, polytetrafluoroethylene, poly(methylmethacrylate), polycarbonate, polystyrene, polyvinylchloride, polyimide, polydimethylsiloxane, cyclic block copolymer, cyclic olefin (co)polymer, and combinations thereof. All these polymeric materials are well known and commercially available from various suppliers. A skilled person is well aware of the hydrophilic behavior a given polymeric material has in comparison to another polymeric material. For example, due to its non-polar molecular structure polytetrafluoroethylene is significantly more hydrophobic than polypropylene. Hence a first microfluidic structure made of polypropylene exhibits a more hydrophilic behavior than a second microfluidic structure made of polytetrafluoroethylene.

A skilled person is also well aware of methods for the surface functionalization (modification) in order to increase the hydrophilic behavior of a given polymeric material. Suitable methods (exemplary reviews are given) include plasma irradiation (e.g., by corona discharge; Agrawal, N.K. et al. (2019) In: Radiation Effects in Polymeric Materials. Kumar, V. et al. (eds.), Springer Press), chemical vapor deposition (Sun, L. et al. (2021) Nat. Rev. Methods Primer 1, e5), ultraviolet irradiation (Jaganathan, S.K. et al. (2014) J. Materials Sci. 50, 2007-2018), and etching (Mijovic, J.S. & Koutsky, J.A. (1977) Polymer Plastics Technol. and Engineer. 9, 139-179). For example, plasma irradiation may also be combined with the preceding deposition of hydrophilic polymers such as polyvinyl alcohol or methacrylate compounds.

In analogy to a smaller average diameter of the capillaries in the second microfluidic structure as compared to the first microfluidic structure, the less hydrophilic behavior exhibited by the (material of the) second microfluidic structure as compared to the first microfluidic structure, results in a higher resistance for the passing of the sample through the second microfluidic structure. Hence, if a first centrifugal force is to be applied along the vertical axis the device to enable the passing of the sample through the first microfluidic structure and a second centrifugal force is to be applied along the vertical axis the device to enable the passing of the sample through the second microfluidic structure, then the second centrifugal force has to be larger than the first centrifugal force.

**In** particular embodiments, the device further comprises a compartment for sample loading, that is, a separate entity for introducing the biological sample in the device. Otherwise, the at least first compartment is used for the loading of the sample. The presence of a separate compartment for sample loading may depend on various factors, such as the volume or viscosity of the sample that may require additional manipulation before further processing of the sample. For many applications, however, the sample may be directly applied to the at least first compartment. The distal end of the compartment for sample loading being connectable to the proximal end of the at least first compartment such that the two compartments are in fluid communication. A microfluidic structure may be arranged at the distal part of the compartment for sample loading. The connection between the compartment for sample loading and the at least first compartments may be rigid, that is, the two compartments represent a monolithic entity. Alternatively, the connection between the two compartments may be detachable, such as in form of a plug connection (i.e., plug and socket) or a bolted connection (i.e., a screw fitting). The compartment for sample loading may have a concave bottom surface in order to concentrate the sample (and any buffers or other reagents) at the center of the bottom in order to facilitate complete processing. An opening in the bottom surface for transferring the sample to the at least first compartment may be sealed with the sealing having a breaking point that is broken after connection of the compartment for sample loading with the at least first compartment, for example by means of a push pillar arranged at the proximal end of the at least first compartment. The compartment for sample loading has a further opening for sample loading, for example, at its top surface. The opening for sample loading may be sealable or lockable with any form of cap, such as a revolving cap.

In other particular embodiments, the device further comprises a reagent reservoir, with the distal end of the reagent reservoir being connectable to the proximal end of the compartment for sample loading such that the two compartments are in fluid communication. Alternatively, the distal end of the reagent reservoir is connectable to the proximal end of the at least first compartment such that the two compartments are in fluid communication. For many applications, it may be adequate to directly connect the reagent reservoir to the at least first compartment. The connection between the reagent reservoir and the compartment for sample loading or the at least first compartment may be rigid, that is, the two compartments represent a monolithic entity. Alternatively, the connection between the two compartments may be detachable, such as in form of a plug connection (i.e., plug and socket) or a bolted connection (i.e., a screw fitting). The reagent reservoir is used for storing the buffers and/or reagents (e.g., chelating agents, lysis reagents, and enzymes). **In** particular embodiments, the reagent reservoir is pre-filled with one or more reagent(s). The prefilled reagent reservoir may be sealed, for example, sealed with a cap. The reagent reservoir may have a concave bottom surface in order to concentrate the reagents (during operation of the device, also a mixture of reagent(s) and biological sample) at the center of the bottom in order to facilitate complete processing. An opening in the bottom surface for transferring the reagent(s) to the compartment for sample loading or the at least first compartment may be sealing with the sealing having a breaking point that is broken after connection with the compartment for sample loading or the at least first compartment, for example by means of a push pillar arranged at the proximal end of the compartment for sample loading or the at least first compartment.

In yet other particular embodiments, the device further comprises a sample collection reservoir for the collection of the processed sample, with the proximal end of the sample collection reservoir being connectable to the distal end of the at least second compartment (i.e., the terminal compartment for performing a step of sample processing) such that the two compartments are in fluid communication. The connection between the sample collection reservoir and the at least second compartment may be rigid, that is, the two compartments represent a monolithic entity. Alternatively, the connection between the two compartments may be detachable, such as in form of a plug connection (i.e., plug and socket) or a bolted connection (i.e., a screw fitting). The sample collection reservoir may have a concave bottom surface in order to concentrate the (finally) processed sample. The sample collection reservoir may be configured to be connectable to any device for the preforming of any downstream applications employing the processed sample. Alternatively, where no separate sample collection reservoir is present, the terminal compartment of the device (for example, the second compartment of a device having a first and a second compartment) may have an opening in the bottom surface or a missing bottom surface so that the sample can be directly collected in a reaction vessel or other container in which the device has been placed.

The device of the present invention can be used to perform any steps of the processing of a biological sample after the obtaining of the sample, for example directly from a subject or from a storage facility or depository, in order to prepare the same for downstream applications (such as nucleic acid amplification and sequencing, mass spectroscopy, immunologic detection methods, and the like). The processing of the biological sample comprises an at least partial purification of the sample, that is, for example, the depletion of a fraction of material contained in the sample or the removal of any debris.

In preferred embodiments, the processing of the biological sample comprises at least two steps selected from the group consisting of collecting of the sample, filtering of the sample, desalting of the sample, concentrating of the sample, diluting of the sample, solubilizing and/or digesting of the sample, depleting a fraction contained in the sample, and enriching a fraction contained in the sample. The actual processing steps performed *inter alia* depend on the type of biological sample to be analyzed and the type of downstream application to which the processed sample is subjected. The step of collecting a sample may comprise securing that the complete sample volume is processed, for example by employing a structure for sample loading having a concave bottom surface. A skilled person is well aware to select appropriate processing steps for a given setting. Such processing steps are well established in the art and standard in the field of molecular biology (see, e.g., Sambrook, J. et al. (1989) Molecular Cloning: A Laboratory Manual. 2nd Ed., Cold Spring Harbor Laboratory Press, Cold Spring Harbor, NY; Ausubel, F.M. et al. (2001) Current Protocols in Molecular Biology. Wiley & Sons, Hoboken, NJ).

Typically, a first processing step relates to a modification of the viscosity of the sample or the concentration of a fraction of material contained in the sample. These steps may also be integral parts of the collection of the sample. Accordingly, such first processing step may concern the dilution of the sample in an appropriate buffer in order to facilitate subsequent steps (e.g., an undiluted whole blood sample may clog an affinity resin in a subsequent fractionation step). A first processing step may also concern the desalting of the biological sample, e.g., by using a filter membrane or a semipermeable membrane and reverse osmosis, as too high salt concentrations may interfere with subsequent processing steps. For such purpose, a reaction compartment comprising a semipermeable membrane may be provided. In another embodiment, the first processing step relates to the solubilization or lysis of the biological sample, that is, the breaking of the tissues and cells in order to release any (macro)molecules of interest, such as nucleic acids or proteins.

Typically, a second processing step relates to fractionation of the materials contained in the biological sample, for example by selective enzymatic digestion of nucleic acids (by addition of nucleases) or proteins (by addition of proteases) or by the selective removal (depletion) of any high-abundant macromolecules which may "mask" low-abundant macromolecules and thus obscure assay results. For example, it is well known that only 20 proteins (e.g., albumin, plasminogen, IgGs, IgMs, IgAs, apolipoproteins) present in human blood plasma samples represent 97-98% of the total protein mass in plasma. **In** order to deplete these proteins, an affinity matrix may be provided to which the proteins are selectively bound via specific antibody molecules (or binding fragments thereof). Such affinity matrices for various purposes are commercially available from various suppliers and may be arranged in a reaction compartment of the device.

Figure 4 illustrates an exemplary device of the present invention adapted for the processing of a urine sample. After sample loading, a first processing step is the desalting of the sample by filtering through a semipermeable membrane arranged in the first compartment. After passing of the first microfluidic structure (capillary barrier), the second processing step is the depletion of abundant proteins by selective capturing on an affinity resin or matrix provided in the second compartment. After passing of the second microfluidic structure (capillary barrier), the processed sample is collected in a sample collection reservoir.

In specific embodiments, one or more compartments of the device may be integrally formed as one piece, as long as the at least first and second compartments are in detachable connection with each other, with the connection being selected from a plug connection and a bolted connection. For example, if present, the compartment for sample loading and the reagent reservoir or the reagent reservoir and the sample collection reservoir may each represent a monolithic entity. The at least first and second compartments may be provided having microfluidic structures with capillaries having particular pre-determined average diameters. Additionally or alternatively, the at least first and second compartments may be provided in a form adapted for particular steps of sample processing, such as compartments comprising a particular affinity-resin for the selective binding of a fraction of the biological sample or compartments comprising a defined membrane for the desalting of the biological sample. In other specific embodiments, the device described herein is provided as a kit-of-parts comprising at least two separate entities, if applicable adapted for a specific application.

Exemplary devices in accordance with the present invention are illustrated in Figures 1, 4, and 5. An exemplary workflow for sample processing employing such device is also shown in Figure 5.

In particular embodiments, the device is configured to be placed in and used with a reaction vessel, in particular with a standard reaction tube during centrifugation. The reaction vessel or reaction tube has typically a volume of 0.1 ml to 50 ml, preferably of 0.2 ml to 10 ml, and more preferably of 0.5 ml to 2.5 ml. For example, reaction tubes with a volume of 0.5 ml, 1.0 ml. 1.5 ml. 2 ml, 5 ml, 10 ml, 15 ml or 50 ml may be employed. Such reaction tubes are commercially available from various suppliers. The device may be configured to be placed in a reaction vessel as tight fit or snug fit module in order to reduce or prevent movement in the reaction vessel during centrifugation. Alternatively, the devices may be configured to directly be used analogously to standard reaction tubes, that is, the devices are shaped like such standard reaction tubes.

In another aspect, the present invention relates to a method for the processing of a biological sample by means of centrifugal force applied along the vertical axis of a processing device, the method comprising:
(i) introducing of the biological sample in a device as defined herein above;
(ii) performing the first step of sample processing in the at least a first compartment of the device by applying a first centrifugal force along the vertical axis of the device, allowing the sample to pass the first microfluidic structure; and
(iii) performing the second step of sample processing in the at least second compartment of the device by applying a second centrifugal force along the vertical axis of the device, allowing the sample to pass the second microfluidic structure,
wherein the second centrifugal force is larger than the first centrifugal force.

The biological sample may be introduced directly in the at least first compartment. Typically, the sample is applied on the structure for sample loading in the at least first compartment. In particular embodiments with the device comprising a compartment for sample loading, the biological sample is introduced in said additional compartment being connected to the at least first compartment of the device. The volume of the biological sample is typically in the range between 5 µl and 25 ml depending on the type of the sample and the application concerned. For example, comparably small sample volumes in the range of 5 µl to 100 µl or in the range of 10 µl to 50 µl may be sufficient for most applications, if blood plasma or blood serum are employed. **If** a urine sample is analyzed, the volume may be in the range of 5 ml to 25 ml or in the range of 10 ml to 20 ml. A skilled person is well aware of selecting an appropriate sample volume in a given setting.

After the biological sample has been introduced in the device, the first step of sample processing may be performed in the at least first compartment. Alternatively, the sample may be first mixed with a suitable buffer and/or other reagents (e.g., chelating agents, lysis reagents, and enzymes) before the first step of sample processing is performed. **In** particular embodiments, after the biological sample has been introduced in the device comprising a reagent reservoir, the reagent(s) are released from the reagent reservoir being connected to the compartment for sample loading or being connected to the at least first compartment of the device. The reagent(s) may be pre-filled in a sealed reagent reservoir, and the release of the reagent(s) may be accomplished by connecting the reagent reservoir to the device (to the compartment for sample loading of the at least first compartment) by breaking the seal at the bottom surface of the reagent reservoir at the breaking point, for example by means of a push pillar arranged at the proximal end of the compartment for sample loading or the at least first compartment.

The device, optionally in an appropriate reaction vessel, is then placed in a centrifuge for performing the first step of sample processing in the at least a first compartment of the device. For this purpose, a first centrifugal force is applied along the vertical axis of the device, allowing the sample to pass the first microfluidic structure and to thus to be transferred to the at least second compartment of the device. The transfer can be controlled by the centrifugal force applied. As long as the centrifugal force applied is less than the first centrifugal force being required to pass the first microfluidic structure, the sample will remain in the at least first compartment. Only once the first centrifugal force has been reached, the sample will be enabled to pass the first microfluidic structure.

It is well within the knowledge of a skilled person to calculate the centrifugal force that needs to be applied in order to force a liquid through a microfluidic structure of a certain configuration.

In order to calculate how much pressure (ΔPa, in N/m²) is required to force any liquid through a tubular capillary of a given material, the following equation can be used: $Δ Pa = \frac{- 4 σ cos {Θ}_{A}}{D}$ with σ being the surface tension in N/m, describing the cohesive forces in the liquid), Θ_{A} being the advancing contact angle (cf. the definition in the legend of Figure 7), and D being the diameter of the capillary (in m). When additionally considering the angular speed during centrifugation and the diameter of rotor employed for centrifugation (i.e., the distance between capillary and center of rotation), then the pressure (ΔPd, in N/m²) required can be calculated using the following equation: $Δ Pd = \frac{1}{2} {ρω}^{2} r$ with ρ being the density of the liquid (in kg/m³), ω² being the angular velocity (in rad/s, determines how much of 2 Pi being passed per s), and r being the distance between capillary and rotation center (in m). It is then to be determined at which point the pressure created by a centrifuge is the same as that being required to drive the liquid through the capillary. This correlation can be expressed by the following equation: $\frac{- 4 σ cos {Θ}_{A}}{D} = \frac{1}{2} {ρω}^{2} r$

If the equation is solved for ω, the angular velocity being required to force a liquid (density, surface tension) through a capillary made of any material (advancing contact angle) and any diameter (D) at any distance (r) from the center of rotation can be calculated as follows: $ω = \sqrt[2]{\frac{- 8 σ {cosθ}_{A}}{{ρr}^{2} D}}$

Many values for the advancing contact angle, the density of a liquid as well as the surface tension for various materials can be readily found in the literature or readily determined experimentally. Typically, values at a temperature of 20°C are given. Angular velocity is usually given in Rad/s. 1 rad = 2 Pi ≈ 6.28. In order to convert rad/s into rotations per minute, (rpm), the rad/s value has to be multiplied by 60 s/2 Pi ≈ 9.55

For example, by using the above considerations the centrifugal force can be calculated (in rpm) that is required to force water to pass a microfluidic structure made of different polymeric materials in dependence of the average diameter of the capillaries comprised in the microfluidic structure. This relationship is illustrated in Figure 6 for two different polymeric materials, polypropylene (Figure 6A) and polytetrafluoroethylene (Figure 6B), respectively. The microfluidic structures employed in the analyses had a thickness of 1 mm. Centrifugation was performed at a temperature of 20°C using 2 ml reaction tubes in a rotor having a diameter of 24 cm. Water has a surface tension of 72.75 N/m and a density of 999 kg/m³. The advancing contact angle between water and polypropylene is 100.7°, and between water and polytetrafluoroethylene is 110°.

From Figure 6A can be derived that 1000 rpm are required to force water to pass a capillary with an average diameter of 1 mm, while 2500 rpm are required to force water to pass a capillary with an average diameter of 0.1 mm. Hence, when applied to a device in accordance with the present invention the transfer of a sample from one compartment to the next one can be precisely controlled by the configuration of the microfluidic structures comprised in each compartment. Using the above example, if the first microfluidic structure having capillaries with a mean diameter of 1 mm can be passed by the centrifugal force generated at 1000 rpm, and the second microfluidic structure having capillaries with a mean diameter of 0.1 mm can be passed by the centrifugal force generated at 2500 rpm, fluid flow can be controlled solely by varying the average diameter of the capillaries. **If** the material of which the first microfluidic structure is made is further modified by surface functionalization in order to increase hydrophilic behavior, the difference in the respective centrifugal forces required to drive water through the first and second microfluidic structures will become even more pronounced.

From Figure 6B, the further impact of the polymeric material used for the manufacture of the microfluidic structures can be derived. When polytetrafluoroethylene is used, which is significantly more hydrophobic than polypropylene, water can be forced to pass capillaries with a mean diameter of 0.1 mm by the centrifugal force generated at 3500 rpm (only 2500 rpm are required when using polypropylene).

Furthermore, Figure 7 illustrates the impact of the advancing contact angle (on the centrifugal force (in rpm) required to transfer water through capillaries (made of an arbitrary polymer, e.g., of polytetrafluoroethylene) and having an average diameter of 100 µm (upper curve) and 1 mm (lower curve). Again, the microfluidic structures employed in the analyses had a thickness of 1 mm. Centrifugation was performed at a temperature of 20°C using 2 ml reaction tubes in a rotor having a diameter of 24 cm. From the results, it is getting apparent that with increasing hydrophobicity there is a more than proportional increase in centrifugal force required in order to force water through capillaries with a decreasing average diameter.

Returning to the method of the present invention, after the sample has passed the first microfluidic structure and entered the at least second compartment, the second step of sample processing in the at least second compartment of the device by applying a second centrifugal force along the vertical axis of the device, allowing the sample to pass the second microfluidic structure, wherein the second centrifugal force is larger than the first centrifugal force. The transfer can be controlled by the centrifugal force applied. As long as the centrifugal force is less than the second centrifugal force, the sample will remain in the at least second compartment. Only once the second centrifugal force has been reached, the sample will be enabled to pass the second microfluidic structure. Due to the head-to-tail arrangement of the individual compartments of the device the samples is transferred unilaterally (that is, always in the same direction) along the vertical axis of the device. Accordingly, the centrifugal force is also applied unidirectionally along the vertical axis of the device.

**If** required for a particular protocol, a third step of sample processing may be performed in a third compartment in fluid communication with the second one. The third compartment is connected with its proximal end to the distal end of the second compartment. A third centrifugal force is applied along the vertical axis of the device, allowing the sample to pass the third microfluidic structure comprised in the third compartment, wherein the third centrifugal force is larger than the second centrifugal force.

In particular embodiments of the present invention, a device is provided that comprises compartments (for performing the steps of sample processing) having arranged therein microfluidic structures with pre-determined configurations. For example, the first compartment comprises a first microfluidic structure that can be passed with a first centrifugal force generated at 50 rpm, the second compartment comprises a second microfluidic structure that can be passed with a second centrifugal force generated at 500 rpm, and the third compartment comprises a third microfluidic structure that can be passed with a third centrifugal force generated at 5000 rpm, respectively.

After the processing of the sample has been completed, the processed sample is removed from the device and subjected to downstream applications. For removal of the processed sample, the at least second compartment may have an opening at the bottom third of the compartment or directly at the bottom surface. The processed sample may be collected in the reaction tube in which the device is placed for centrifugation. In particular embodiments, the processed sample is collected in the sample collection reservoir being connected to the at least second compartment of the device.

The biological sample to be analyzed herein is a sample derived from a mammal, such as a mouse, rat, hamster, rabbit, cat, dog, pig, cow, horse or monkey, and preferably a human. Such samples may include body tissues (e.g., biopsies or resections, tissue specimens, and tissue lysates), swabs (e.g., nasopharyngeal or oropharyngeal swabs, wound swabs, skin swabs), stool samples, and body fluids (including liquid biopsies), such as blood (whole blood, plasma, serum), saliva, sputum, sweat, urine, cerebrospinal fluid, interstitial fluid, tear fluid, lymph fluid, and eye ball fluid. The samples may contain a single cell, a cell population (i.e., two or more cells) or a cell extract or a suspension derived from a body tissue or swab, and may be used in unpurified form or subjected to any enrichment or purification step(s) prior to use. The skilled person is well aware of various such purification methods (see, e.g., Sambrook, J. et al. (1989) Molecular Cloning: A Laboratory Manual. 2nd Ed., Cold Spring Harbor Laboratory Press, Cold Spring Harbor, NY; Ausubel, F.M. et al. (2001) Current Protocols in Molecular Biology. Wiley & Sons, Hoboken, NJ). The term "whole blood" refers to blood with all its constituents (i.e., both blood cells and plasma). The term "plasma" denotes the blood's liquid medium. The term "serum" refers to plasma from which the clotting proteins have been removed. In particular embodiments, the biological sample is selected from the group consisting of blood, plasma, serum, saliva, urine, nasopharyngeal swab, oropharyngeal swab, and tissue specimens.

In another aspect, the present invention relates to the use of a device as defined herein above for the processing of a biological sample to be subjected to so-called 'omics' applications. 'Omics' applications are relatively new biomarker discovery and monitoring tools that can be applied to study large sets of biological molecules. Overall, the objective of 'omics' applications is to identify, characterize, and quantify all biological molecules of a certain type that are involved in the structure, function, and dynamics of a cell, tissue, or organism. Numerous 'omics' applications are well known in the art, such as genomics, epigenomics, phenomics, transcriptomics, proteomics, lipidomics, glycomics, microbiomics, and metabolomics.

Genomics studies the structure, function, evolution, mapping, and editing of genomes and aims at characterization and quantification of genes. Epigenomics investigates the supporting structure of the genome, including protein and RNA binders, alternative DNA structures, and DNA modifications. Phenomics is the systematic study of traits that make up a phenotype. Transcriptomics analyzes an organism's transcriptome, the sum of all of its mRNA transcripts. It includes the amount or concentration of each RNA molecule in addition to the molecular identities. The term proteome refers to the sum of all the proteins in a cell, tissue, or organism.

Proteomics is the science that studies those proteins as related to their biochemical properties and functional roles, and how their quantities, modifications, and structures change during growth and in response to internal and external stimuli. Lipidomics studies the entirety of an organism's lipids, and glycomics the entirety of sugars and carbohydrates. The microbiome is the community of microorganisms that can usually be found living together in a given habitat. The metabolome represents the collection of all metabolites in a biological cell, tissue, organ, or organism, which are the end products of cellular processes. Metabolomics is the science that studies all chemical processes involving metabolites.

**In** particular embodiments, the device is used for the processing of a biological sample to be subjected to 'omics' applications selected from the group consisting of genomics, transcriptomics, proteomics, lipidomics, glycomics, microbiomics, and metabolomics.

## Claims

1. Device for the processing of a biological sample by means of centrifugal force applied along the vertical axis of the device, the device comprising:
(i) at least a first compartment for the performing of a first step of sample processing, the first compartment comprising a structure for the loading of the biological sample at its proximal part and a first microfluidic structure at its distal part; and
(ii) at least a second compartment for the performing of a second step of sample processing, the proximal end of the second compartment being in fluid communication with the distal end of the first compartment, and the second compartment comprising a second microfluidic structure at its distal part, with the second step of sample processing being consecutive to the first step of sample processing;
wherein the at least first compartment and the at least second compartment are in connection with each other, with the connection being selected from a plug connection and a bolted connection;
wherein the first microfluidic structure comprises capillaries having a first average diameter, and the second microfluidic structure comprises capillaries having a second average diameter, with the first average diameter being larger than the second average diameter, thus enabling the first microfluidic structure the passing of the biological sample by applying a first centrifugal force along the vertical axis the device, and enabling the second microfluidic structure the passing of the biological sample by applying a second centrifugal force along the vertical axis the device, with the second centrifugal force being larger than the first centrifugal force; and
wherein the first microfluidic structure exhibits a more hydrophilic behavior than the second microfluidic structure.

2. The device of claim 1, wherein the first microfluidic structure has functional surface modifications in order to exhibit a more hydrophilic behavior than the second microfluidic structure.

3. The device of claim 1 or 2, wherein the processing of the biological sample occurs unidirectionally along the vertical axis of the device.

4. The device of any one of claims 1 to 3, wherein the processing of the biological sample in the at least first and second compartments of the device comprises at least two steps selected from the group consisting of collecting of the sample, filtering of the sample, desalting of the sample, concentrating of the sample, diluting of the sample, solubilizing and/or digesting of the sample, depleting a fraction contained in the sample, and enriching a fraction contained in the sample.

5. The device of any one of claims 1 to 4, wherein the device is configured to be placed in and to be used with a reaction vessel, with the reaction vessel having a volume of 0.1 ml to 50 ml, preferably of 0.2 ml to 10 ml, and more preferably of 0.5 ml to 2.5 ml.

6. The device of any one of claims 1 to 5, further comprising a compartment for sample loading, with the distal end of the compartment for sample loading being connectable to the proximal end of the at least first compartment such that the two compartments are in fluid communication.

7. The device of any one of claims 1 to 6, further comprising a reagent reservoir, with the distal end of the reagent reservoir being connectable to the proximal end of the compartment for sample loading such that the two compartments are in fluid communication; or with the distal end of the reagent reservoir being connectable to the proximal end of the at least first compartment such that the two compartments are in fluid communication, particularly wherein the reagent reservoir is pre-filled with reagent(s).

8. The device of any one of claims 1 to 7, further comprising a sample collection reservoir for the collection of the processed sample, with the proximal end of the sample collection reservoir being connectable to the distal end of the at least second compartment such that the two compartments are in fluid communication.

9. Method for the processing of a biological sample by means of centrifugal force applied along the vertical axis of a processing device, the method comprising:
(i) introducing of the biological sample in a device as defined in any one of claims 1 to 8;
(ii) performing the first step of sample processing in the at least a first compartment of the device by applying a first centrifugal force along the vertical axis of the device, allowing the sample to pass the first microfluidic structure; and
(iii) performing the second step of sample processing in the at least second compartment of the device by applying a second centrifugal force along the vertical axis of the device, allowing the sample to pass the second microfluidic structure,
wherein the second centrifugal force is larger than the first centrifugal force.

10. The method of claim 9, further comprising:
loading the biological sample to the compartment for sample loading being connected to the at least first compartment of the device; and/or
after the biological sample has been introduced in the device, releasing the reagent(s) from the reagent reservoir being connected to the compartment for sample loading or being connected to the at least first compartment of the device.

11. The method of claim 9 or 10, further comprising:
collecting the processed sample in the sample collection reservoir being connected to the at least second compartment of the device.

12. The method of any one of claims 9 to 11, wherein the biological sample is selected from the group consisting of blood, plasma, serum, saliva, urine, nasopharyngeal swab, oropharyngeal swab, and tissue specimens.

13. Use of a device as defined in any one of claims 1 to 8 for the processing of a biological sample to be subjected to 'omics' applications, particularly wherein the 'omics' applications are selected from the group consisting of genomics, transcriptomics, proteomics, lipidomics, glycomics, microbiomics, and metabolomics.

## Patentansprüche

1. Vorrichtung zur Prozessierung einer biologischen Probe mittels Zentrifugalkraft, die entlang der vertikalen Achse der Vorrichtung angelegt wird, wobei die Vorrichtung umfasst:
(i) mindestens ein erstes Kompartiment zur Durchführung eines ersten Schrittes der Prozessierung der Probe, wobei das erste Kompartiment an seinem proximalen Ende eine Struktur zur Aufnahme der biologischen Probe und an seinem distalen Ende eine erste mikrofluidische Struktur aufweist; und
(ii) mindestens ein zweites Kompartiment zur Durchführung eines zweiten Schrittes der Prozessierung der Probe, wobei das proximale Ende des zweiten Kompartiments in Fluidverbindung mit dem distalen Ende des ersten Kompartiments steht, und das zweite Kompartiment an seinem distalen Ende eine zweite mikrofluidische Struktur aufweist, wobei der zweite Schritt der Prozessierung der Probe dem ersten Schritt der Prozessierung der Probe folgt;
wobei das mindestens erste Kompartiment und das mindestens zweite Kompartiment in Verbindung miteinander sind, wobei die Verbindung aus einer Steckverbindung oder einer Schraubverbindung ausgewählt wird;
wobei die erste mikrofluidische Struktur Kapillaren mit einem ersten mittleren Durchmesser aufweist, und die zweite mikrofluidische Struktur Kapillaren mit einem zweiten mittleren Durchmesser aufweist, wobei der erste mittlere Durchmesser größer als der zweite mittlere Durchmesser ist, wodurch das Passieren der biologischen Probe durch die erste mikrofluidische Struktur durch Anlegen einer ersten Zentrifugalkraft entlang der vertikalen Achse der Vorrichtung und das Passieren der biologischen Probe durch die zweite mikrofluidische Struktur durch Anlegen einer zweiten Zentrifugalkraft entlang der vertikalen Achse der Vorrichtung ermöglicht wird, wobei die zweite Zentrifugalkraft größer als die erste Zentrifugalkraft ist; und
wobei die erste mikrofluidische Struktur ein hydrophileres Verhalten aufweist als die zweite mikrofluidische Struktur.

2. Vorrichtung gemäß Anspruch 1, wobei die erste mikrofluidische Struktur funktionelle Oberflächenmodifikationen aufweist, um ein hydrophileres Verhalten als die zweite mikrofluidische Struktur zu zeigen.

3. Vorrichtung gemäß Anspruch 1 oder 2, wobei die Prozessierung der biologischen Probe unidirektional entlang der vertikalen Achse der Vorrichtung erfolgt.

4. Vorrichtung gemäß einem der Ansprüche 1 bis 3, wobei die Prozessierung der biologischen Probe in den mindestens ersten und zweiten Kompartimenten der Vorrichtung mindestens zwei Schritte umfasst, die aus der Gruppe ausgewählt werden, bestehend aus: Sammeln der Probe, Filtrieren der Probe, Entsalzen der Probe, Konzentrieren der Probe, Verdünnen der Probe, Solubilisieren und/oder Aufschließen der Probe, Abreichern einer in der Probe enthaltenen Fraktion und Anreichern einer in der Probe enthaltenen Fraktion.

5. Vorrichtung gemäß einem der Ansprüche 1 bis 4, wobei die Vorrichtung zur Platzierung und Verwendung in einem Reaktionsgefäß mit einem Volumen von 0.1 ml bis 50 ml, vorzugsweise von 0.2 ml bis 10 ml, und besonders bevorzugt von 0.5 ml bis 2.5 ml konfiguriert ist.

6. Vorrichtung gemäß einem der Ansprüche 1 bis 5, die ferner ein Kompartiment zur Probenaufnahme umfasst, wobei das distale Ende des Kompartiments zur Probenaufnahme mit dem proximalen Ende des mindestens ersten Kompartiments so verbindbar ist, dass die beiden Kompartimente in Fluidverbindung stehen.

7. Vorrichtung gemäß einem der Ansprüche 1 bis 6, die ferner ein Reagenzreservoir umfasst, wobei das distale Ende des Reagenzreservoirs mit dem proximalen Ende des Kompartiments zur Probenaufnahme so verbindbar ist, dass die beiden Kompartimente in Fluidverbindung stehen; oder wobei das distale Ende des Reagenzreservoirs mit dem proximalen Ende des mindestens ersten Kompartiments so verbindbar ist, dass die beiden Kompartimente in Fluidverbindung stehen, wobei insbesondere das Reagenzreservoir mit Reagenz(ien) vorgefüllt ist.

8. Vorrichtung gemäß einem der Ansprüche 1 bis 7, die ferner ein Probenauffangreservoir zum Auffangen der prozessierten Probe umfasst, wobei das proximale Ende des Probenauffangreservoirs mit dem distalen Ende des mindestens zweiten Kompartiments so verbindbar ist, dass die beiden Kompartimente in Fluidverbindung stehen.

9. Verfahren zur Prozessierung einer biologischen Probe mittels Zentrifugalkraft, die entlang der vertikalen Achse einer Vorrichtung zur Prozessierung angelegt wird, wobei das Verfahren umfasst:
(i) Einbringen der biologischen Probe in eine Vorrichtung wie in einem der Ansprüche 1 bis 8 definiert;
(ii) Durchführung des ersten Schrittes der Prozessierung der Probe in dem mindestens ersten Kompartiment der Vorrichtung durch Anlegen einer ersten Zentrifugalkraft entlang der vertikalen Achse der Vorrichtung, wodurch der Probe das passieren der ersten mikrofluidischen Struktur ermöglicht wird; und
(iii) Durchführung des zweiten Schrittes der Prozessierung der Probe in dem mindestens zweiten Kompartiment der Vorrichtung durch Anlegen einer zweiten Zentrifugalkraft entlang der vertikalen Achse der Vorrichtung, wodurch der Probe das Passieren der zweiten mikrofluidischen Struktur ermöglicht wird,
wobei die zweite Zentrifugalkraft größer als die erste Zentrifugalkraft ist.

10. Verfahren gemäß Anspruch 9, ferner umfassend:
Einbringen der biologischen Probe in das Kompartiment zur Probenaufnahme, das mit dem zumindest ersten Kompartiment der Vorrichtung verbunden ist; und/oder
nachdem die biologische Probe in die Vorrichtung eingebracht wurde, Freisetzen des/der Reagenz(ien) aus dem Reagenzreservoir, das mit dem Kompartiment zur Probenaufnahme verbunden ist oder das mit dem zumindest ersten Kompartiment der Vorrichtung verbunden ist.

11. Verfahren gemäß Anspruch 9 oder 10, ferner umfassend:
Auffangen der prozessierten Probe in dem Probenauffangreservoir, das mit dem zumindest zweiten Kompartiment der Vorrichtung verbunden ist.

12. Verfahren gemäß einem der Ansprüche 9 bis 11, wobei die biologische Probe aus der Gruppe ausgewählt ist, die aus Blut, Plasma, Serum, Speichel, Urin, Nasopharyngealabstrich, Oropharyngealabstrich und Gewebeproben besteht.

13. Verwendung einer Vorrichtung wie in einem der Ansprüche 1 bis 8 definiert zur Prozessierung einer biologischen Probe, die "Omics"-Anwendungen unterzogen werden soll, wobei insbesondere die "Omics"-Anwendungen aus der Gruppe ausgewählt sind, die aus Genomik, Transkriptomik, Proteomik, Lipidomik, Glykomik, Mikrobiomik und Metabolomik besteht.

## Revendications

1. Dispositif de traitement d'un échantillon biologique au moyen d'une force centrifuge appliquée le long de l'axe vertical du dispositif, le dispositif comprenant :
(i) au moins un premier compartiment pour la réalisation d'une première étape de traitement de l'échantillon, le premier compartiment comprenant une structure pour le chargement de l'échantillon biologique au niveau de sa partie proximale et une première structure microfluidique au niveau de sa partie distale; et
(ii) au moins un second compartiment pour la réalisation d'une seconde étape de traitement de l'échantillon, l'extrémité proximale du second compartiment étant en communication fluidique avec l'extrémité distale du premier compartiment, et le second compartiment comprenant une seconde structure microfluidique au niveau de sa partie distale, la seconde étape de traitement de l'échantillon étant consécutive à la première étape de traitement de l'échantillon;
dans lequel ledit au moins un premier compartiment et ledit au moins un second compartiment sont reliés l'un à l'autre, la liaison étant choisie parmi une liaison par emboîtement et une liaison par boulonnage;
dans lequel la première structure microfluidique comprend des capillaires ayant un premier diamètre moyen, et la seconde structure microfluidique comprend des capillaires ayant un second diamètre moyen, le premier diamètre moyen étant supérieur au second diamètre moyen, permettant ainsi le passage de l'échantillon biologique à travers la première structure microfluidique par application d'une première force centrifuge le long de l'axe vertical du dispositif, et permettant le passage de l'échantillon biologique à travers la seconde structure microfluidique par application d'une seconde force centrifuge le long de l'axe vertical du dispositif, la seconde force centrifuge étant supérieure à la première force centrifuge; et
dans lequel la première structure microfluidique présente un comportement plus hydrophile que la seconde structure microfluidique.

2. Dispositif selon la revendication 1, dans lequel la première structure microfluidique présente des modifications de surface fonctionnelles afin de présenter un comportement plus hydrophile que la seconde structure microfluidique.

3. Dispositif selon la revendication 1 ou 2, dans lequel le traitement de l'échantillon biologique s'effectue de manière unidirectionnelle le long de l'axe vertical du dispositif.

4. Dispositif selon l'une quelconque des revendications 1 à 3, dans lequel le traitement de l'échantillon biologique dans au moins les premier et second compartiments du dispositif comprend au moins deux étapes choisies dans le groupe constitué par le prélèvement de l'échantillon, la filtration de l'échantillon, la dessalage de l'échantillon, la concentration de l'échantillon, la dilution de l'échantillon, la solubilisation et/ou la digestion de l'échantillon, l'appauvrissement en une fraction contenue dans l'échantillon et l'enrichissement en une fraction contenue dans l'échantillon.

5. Dispositif selon l'une quelconque des revendications 1 à 4, dans lequel le dispositif est configuré pour être placé dans un récipient de réaction et utilisé avec celui-ci, le récipient de réaction ayant un volume de 0,1 ml à 50 ml, de préférence de 0,2 ml à 10 ml, et plus préférentiellement de 0,5 ml à 2,5 ml.

6. Dispositif selon l'une quelconque des revendications 1 à 5, comprenant en outre un compartiment de chargement d'échantillon, l'extrémité distale du compartiment de chargement d'échantillon pouvant être raccordée à l'extrémité proximale dudit au moins premier compartiment de telle sorte que les deux compartiments soient en communication fluidique.

7. Dispositif selon l'une quelconque des revendications 1 à 6, comprenant en outre un réservoir de réactif, l'extrémité distale du réservoir de réactif pouvant être raccordée à l'extrémité proximale du compartiment de chargement d'échantillon de telle sorte que les deux compartiments soient en communication fluidique; ou l'extrémité distale du réservoir de réactif pouvant être raccordée à l'extrémité proximale dudit au moins premier compartiment de telle sorte que les deux compartiments soient en communication fluidique, le réservoir de réactif étant notamment prérempli de réactif(s).

8. Dispositif selon l'une quelconque des revendications 1 à 7, comprenant en outre un réservoir de collecte d'échantillon pour la collecte de l'échantillon traité, l'extrémité proximale du réservoir de collecte d'échantillon pouvant être raccordée à l'extrémité distale dudit au moins second compartiment de telle sorte que les deux compartiments soient en communication fluidique.

9. Procédé de traitement d'un échantillon biologique au moyen d'une force centrifuge appliquée le long de l'axe vertical d'un dispositif de traitement, le procédé comprenant:
(i) l'introduction de l'échantillon biologique dans un dispositif tel que défini dans l'une quelconque des revendications 1 à 8;
(ii) la réalisation de la première étape de traitement de l'échantillon dans le au moins un premier compartiment du dispositif par application d'une première force centrifuge le long de l'axe vertical du dispositif, permettant à l'échantillon de traverser la première structure microfluidique; et
(iii) la réalisation de la seconde étape de traitement de l'échantillon dans le au moins un second compartiment du dispositif par application d'une seconde force centrifuge le long de l'axe vertical du dispositif, permettant à l'échantillon de traverser la seconde structure microfluidique,
dans lequel la seconde force centrifuge est supérieure à la première force centrifuge.

10. Procédé selon la revendication 9, comprenant en outre:
le chargement de l'échantillon biologique dans le compartiment de chargement d'échantillon relié au moins un premier compartiment du dispositif; et/ou
après l'introduction de l'échantillon biologique dans le dispositif, la libération du ou des réactifs à partir du réservoir de réactifs relié au compartiment de chargement d'échantillon ou relié au moins un premier compartiment du dispositif.

11. Procédé selon la revendication 9 ou 10, comprenant en outre:
la collecte de l'échantillon traité dans le réservoir de collecte d'échantillon relié au moins un second compartiment du dispositif.

12. Procédé selon l'une quelconque des revendications 9 à 11, dans lequel l'échantillon biologique est choisi dans le groupe constitué par le sang, le plasma, le sérum, la salive, l'urine, un prélèvement nasopharyngé, un prélèvement oropharyngé et des échantillons de tissus.

13. Utilisation d'un dispositif tel que défini dans l'une quelconque des revendications 1 à 8 pour le traitement d'un échantillon biologique destiné à être soumis à des applications "omiques", en particulier dans laquelle les applications "omiques" sont choisies dans le groupe constitué par la génomique, la transcriptomique, la protéomique, la lipidomique, la glycomique, la microbiomique et la métabolomique.
